(19) Europäisches Patentamt

European Patent Office

Office européen des brevets

(11) **EP 1 087 274 B1**

(12) **EUROPÄISCHE PATENTSCHRIFT**

(45) Veröffentlichungstag und Bekanntmachung des Hinweises auf die Patenterteilung:
**06.08.2003 Patentblatt 2003/32**

(51) Int Cl.⁷: **G05B 19/042**, G05B 19/406

(21) Anmeldenummer: **00120157.3**

(22) Anmeldetag: **21.09.2000**

(54) **Überwachungsverfahren und - einrichtung für numerisch gesteuerte Werkzeugmaschinen**

Monitoring method and device for numerically controlled machine tools

Procédé et dispositif de surveillance pour machines-outils à commande numérique

(84) Benannte Vertragsstaaten:
**CH DE ES FR GB IT LI**

(30) Priorität: **22.09.1999 DE 19945395**

(43) Veröffentlichungstag der Anmeldung:
**28.03.2001 Patentblatt 2001/13**

(73) Patentinhaber: **DECKEL MAHO Pfronten GmbH**
**87459 Pfronten (DE)**

(72) Erfinder:
• **Bornemann, Armin**
**87616 Marktoberdorf (DE)**
• **Seitz, Reinhold**
**87659 Hopferau (DE)**

(74) Vertreter: **Beetz & Partner Patentanwälte**
**Steinsdorfstrasse 10**
**80538 München (DE)**

(56) Entgegenhaltungen:
**EP-A- 0 791 872**     US-A- 4 827 197

**Beschreibung**

Die Erfindung betrifft ein Überwachungsverfahren und eine Überwachungseinrichtung für numerisch gesteuerte Werkzeugmaschinen mit einer motorisch drehangetriebenen Arbeitsspindel und einer trennenden Schutzeinrichtung.

Numerisch gesteuerte Werkzeugmaschinen sind zum Schutz der Bedienpersonen in der Regel mit Trennwänden oder Schutzkabinen ausgestattet, durch die u.a. verhindert werden soll, daß die Bedienpersonen durch wegfliegende Werkzeuge, Werkstücke oder Bruchstücke gefährdet werden. Gerade die Sichtwände derartiger Trenn- oder Schutzelemente weisen jedoch eine begrenzte Festigkeit auf. Da die Schutzeinrichtungen vielfach auch beweglich sein müssen, ist auch im Hinblick auf deren Dikke eine Grenze vorgegeben. Durch Fehlprogrammienmg oder falsche Bedienung der Werkzeugmaschinen können jedoch u.U. Betriebszustände eintreten, die zu einer Gefährdung des Bedienpersonals führen können. So kann z.B. eine auswechselbare Schneide eines Fräswerkzeuges durch Fehlprogrammierung bzw. falsche Eingabe der Drehzahl bei einem Bruch mit derart hoher Energie aus dem Werkzeugträger geschleudert werden, daß die trennenden Schutzeinrichtungen den mechanischen Beanspruchungen bei einem Aufprall nicht mehr standhalten.

Aufgabe der Erfindung ist es, ein Überwachungsverfahren und eine Überwachungseinrichtung für Werkzeugmaschinen zu schaffen, die eine Verbesserung der Maschinensicherheit ermöglichen.

Aus der Druckschrift US 4,827,197 ist eine Zentrifuge bekannt, bei der das Trägheitsmoment des eingesetzten Rotors durch Messen der Beschleunigung bei konstantem Erregerstrom bestimmt wird. Vermittels einer Tabelle mit verschiedenen Rotoren und deren Trägheitsmomenten wird der eingesetzte Rotor identifiziert und die Drehgeschwindigkeit auf ein für den ermittelten Rotor bei vorgegebener Abdeckhaube als sicher erachteten Wert beschränkt.

Diese Aufgabe wird durch ein Überwachungsverfahren und eine Überwachungseinrichtung mit den Merkmalen der unabhängigen Ansprüche 1 bzw. 9 gelöst.

Gemäß der Erfindung wird das tatsächliche Massenträgheitsmoment eines in die Arbeitsspindel eingewechselten Werkzeuges auf der Grundlage einer Messung bestimmt und mit einem aus vorgegebenen Werkzeugdaten für dieses Werkzeug berechneten Massenträgheitsmoment verglichen. Auf diese Weise kann geprüft werden, ob die in der NC-Steuerung eingegebenen geometrischen Werkzeugdaten mit den

Daten des in der Arbeitsspindel befindlichen Werkzeuges übereinstimmen oder ob z.B. falsche Durchmesserwerte eingegeben oder programmiert sind. Durch Vergleich einer vorgegebenen Kenngröße des eingewechselten Werkzeuges mit einer von der Festigkeit der trennenden Schutzeinrichtung abhängigen Maximalkenngröße kann bestimmt werden, ob die Schutzeinrichtung mit den gewählten Bearbeitungsdaten einer evtl. Kollision mit wegfliegenden Teilen standhält. Der Antrieb der Arbeitsspindel erfolgt nur dann mit der vorgegebenen Solldrehzahl, wenn das tatsächliche Massenträgheitsmoment mit dem berechneten Massenträgheitsmoment übereinstimmt und die vorgegebene Kenngröße kleiner oder gleich der durch die Festigkeit der Schutzeinrichtung vorgegebenen Maximalkenngröße ist. Auf diese Weise kann eine fehlerhafte Eingabe von Werkzeugdurchmesser und Drehzahl erkannt werden und die Antriebsdrehzahl der Arbeitsspindel kann auf ein zulässiges Maß begrenzt bzw. der Antrieb gestoppt und eine Fehlermeldung ausgegeben werden.

Zweckmäßige Ausgestaltungen der Erfindung sind in den Unteransprüchen angegeben.

So kann z.B. die vorgegebene Kenngröße zweckmäßigerweise der eingegebene Werkzeugdurchmesser sein, der mit einem von der programmierten Drehzahl abhängigen Maximaldurchmesser verglichen wird. Die vorgegebene Kenngröße kann aber auch die eingegebene Solldrehzahl der Arbeitsspindel sein, die mit einer vom Werkzeugdurchmesser abhängigen Maximaldrehzahl verglichen wird.

Bei Abweichungen zwischen dem tatsächlichen Massenträgheitsmoment und dem berechneten Massenträgheitsmoment und/oder bei Überschreiten der Maximalkenngröße wird der Antrieb der Arbeitsspindel zweckmäßigerweise gestoppt und/oder eine Fehlermeldung ausgegeben. Die Drehzahl der Arbeitsspindel kann auch auf ein zulässiges Maß reduziert werden.

Das tatsächliche Massenträgheitsmoment des in der Arbeitsspindel eingesetzten Werkzeuges läßt sich auf besonders einfache Weise auf der Grundlage der Hochlaufzeit berechnen, die bei der Beschleunigung des Werkzeuges auf eine vorgegebene Referenzdrehzahl gemessen wird. Falls die Werkzeugmaschine über ein z.B. mechanisches oder optisches Meßsystem zur Erfassung der in der Arbeitsspindel befindlichen Werkzeugabmessungen verfügt, kann das tatsächliche Massenträgheitsmoment auch anhand der so ermittelten Werkzeugdaten berechnet und mit dem aus den eingegebenen Werten berechneten Massenträgheitsmoment verglichen werden, werden.

Das tatsächliche Massenträgheitsmoment kann auch auf beide Arten berechnet werden, wodurch eine größere Sicherheit erreichbar ist.

In einer weiteren zweckmäßigen Ausführung wird die Arbeitsspindel zunächst auf eine vorgegebene Referenzdrehzahl beschleunigt, wobei die Stromaufnahme des Antriebsmotors gemessen wird. Durch Vergleich der Stromaufnahme mit einer Referenz, die sich beim Hochlauf einer Arbeitsspindel ohne Werkzeug ergibt, kann überprüft werden, ob sich überhaupt ein Werkzeug in der Arbeitsspindel befindet Wenn dies nicht der Fall ist, kann der Antrieb gestoppt und eine Fehlermeldung ausgegeben werden.

Eine weitere vorteilhafte Ausführung zeichnet sich dadurch aus, daß die Arbeitsspindel nur dann mit der vorgegebenen Solldrehzahl angetrieben wird, wenn eine beim Hochfahren der Arbeitsspindel auf eine vorgegebene Referenzdrehzahl gemessene Unwucht unterhalb einer maximal zulässigen Unwucht liegt.

Weitere Besonderheiten und Vorzüge der Erfindung ergeben sich aus der folgenden Beschreibung eines Ausführungsbeispiels anhand der Zeichnung. Es zeigen:

Fig. 1 bis 4: ein Ablaufdiagramm eines erfindungsgemäßen Überwachungsverfahrens;

Fig. 5: einen typischen Verlauf der Stromaufnahme eines Antriebsmotors bei der Beschleunigung einer Arbeitsspindel mit und ohne Werkzeug; und

Fig. 6: ein Diagramm, das den Zusammenhang zwischen dem maximal zulässigen Werkzeugdurchmesser und der maximal zulässigen Spindeldrehzahl als Funktion der Rückhaltefähigkeit einer trennenden Schutzeinrichtung zeigt.

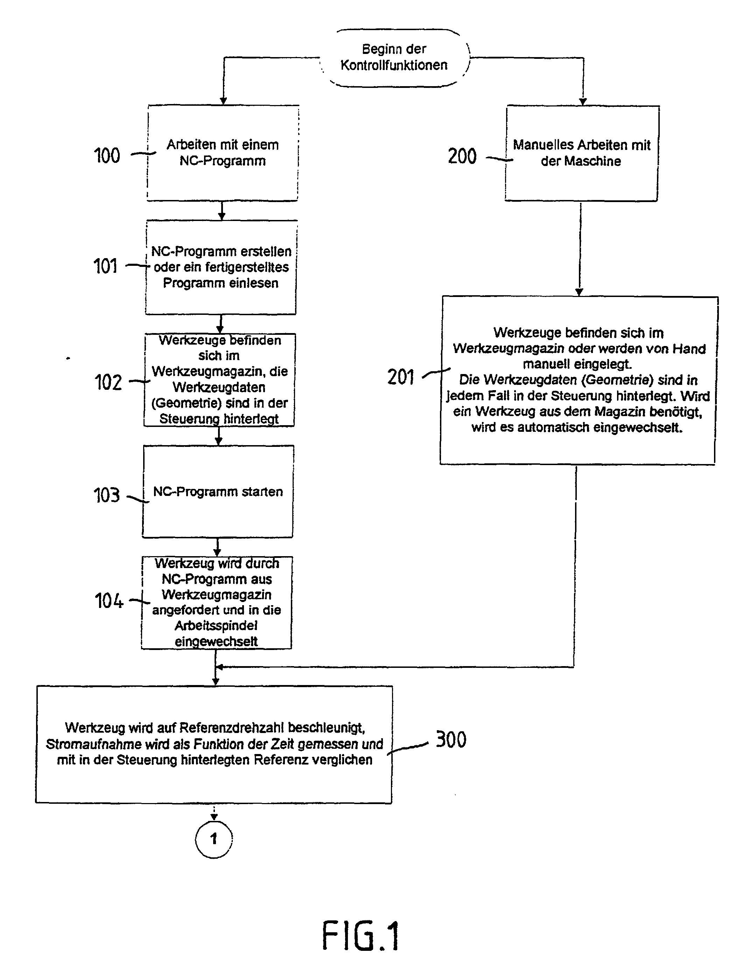

In den Fig. 1 bis 4 sind die einzelnen Abläufe einer automatischen Überwachung gezeigt, die z.B. bei einer numerisch gesteuerten Universal-Fräs- und Bohrmaschine mit automatischem Werkzeugwechsler und Schutzkabine sowohl bei einem NC-Betrieb 100 als auch bei einem von Hand gesteuerten Betrieb 200 durchgeführt werden kann.

Wie in Fig. 1 gezeigt, erfolgt beim NC-Betrieb 100 eine Eingabe 101 des NC-Programms durch direktes Einprogrammieren an der Maschine oder durch Einlesen eines bereits fertiggestellten Programms in eine NC-Steuerung. Dabei wird auch eine Speicherung 102 von geometrischen Werkzeugdaten der in einem Werkzeugmagazin befindlichen Werkzeuge vorgenommen. Nach einem Start 103 des NC-Programms wird durch entsprechende Ansteuerung des automatischen Werkzeugwechslers ein Werkzeugwechsel 104 zur Einwechslung eines benötigten Werkzeuges in die Arbeitsspindel durchgeführt. Auch bei einem von Hand gesteuerten Betrieb 200 sind die geometrischen Werkzeugdaten der sich im Werkzeugmagazin befindlichen oder manuell eingelegten Werkzeuge in der NC-Steuerung hinterlegt. Durch einen entsprechenden Steuerbefehl des Bedieners erfolgt ein automatischer Werkzeugwechsel 201 und das benötigte Werkzeug wird in die Arbeitsspindel eingewechselt.

Nach Beendigung eines entweder durch das NC-Programm oder durch den Bediener initiierten Werkzeugwechsels 104 bzw. 201 wird die Arbeitsspindel gemäß Fig. 1 in einem Schritt 300 auf eine Referenzdrehzahl beschleunigt. Dabei wird die Stromaufnahme des Antriebsmotors als Funktion der Zeit gemessen und mit einer in der Steuerung der Werkzeugmaschine hinterlegten Referenzkurve für einen Hochlauf der Arbeitsspindel ohne Werkzeug verglichen.

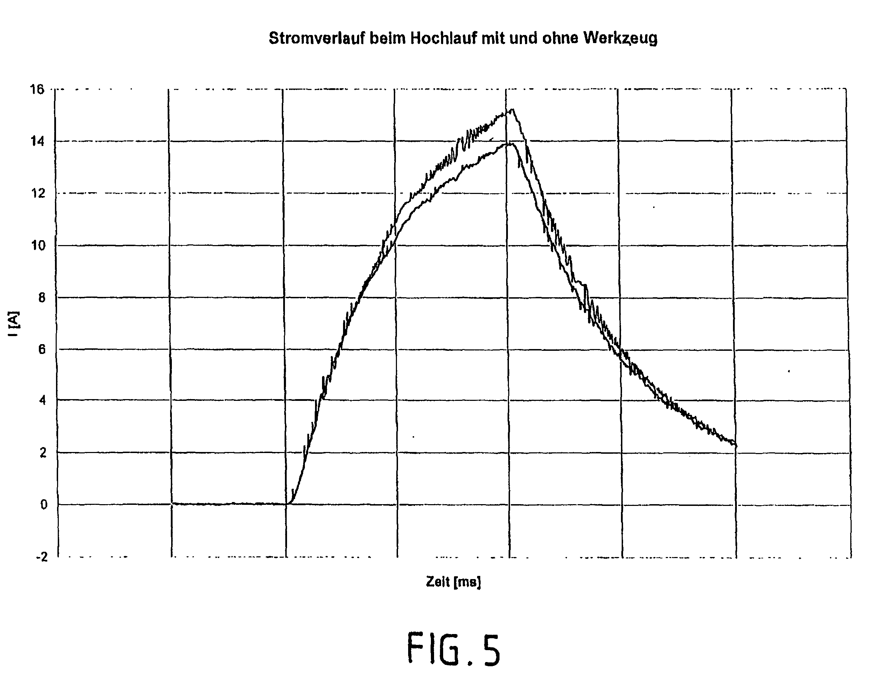

In Fig. 5 ist ein typischer Stromverlauf beim Hochlauf der Arbeitsspindel mit oder ohne Werkzeug dargestellt Die in Fig. 5 untere Kurve zeigt dabei den Stromverlauf beim Hochlauf einer Arbeitsspindel ohne Werkzeug. Diese Kurve kann als Referenzkurve in der Steuerung der Werkzeugmaschine hinterlegt sein. Die in Fig. 5 dargestellte obere Kurve zeigt dagegen den Stromverlauf, der sich beim Hochlauf der Arbeitsspindel mit einem eingesetzten Werkzeug ergibt.

Durch Vergleich einer tatsächlich ermittelten Hochlauflaufkurve mit der in der Steuerung hinterlegten Referenzkurve kann dann überprüft werden, ob sich ein Werkzeug in der Arbeitsspindel befindet.

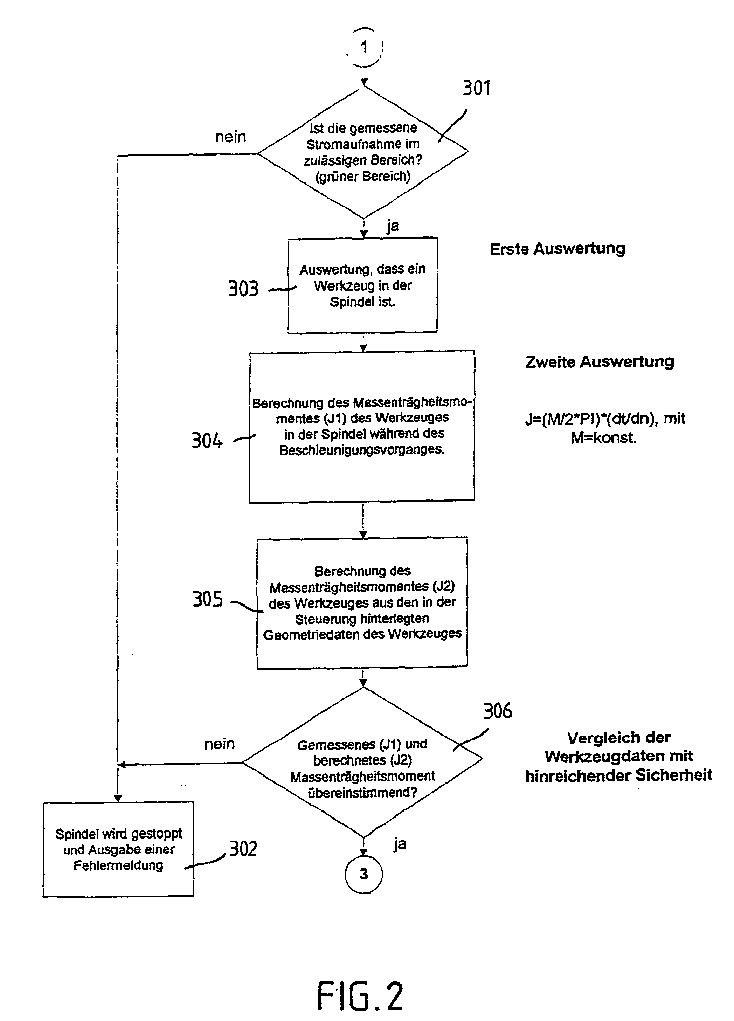

Ergibt z.B. eine im Schritt 301 gemäß Fig. 2 durchgeführte Überprüfung, daß der in Schritt 300 gemessene Stromverlauf nicht in einem zulässigen Bereich über der Referenzkurve liegt, wird davon ausgegangen, daß sich kein Werkzeug in der Arbeitsspindel befindet, wobei dann in einem Schritt 302 der Antrieb der Arbeitsspindel gestoppt und eine Fehlermeldung ausgegeben wird. Wenn die gemessene Stromaufnahme jedoch innerhalb des zulässigen Bereichs liegt, wird in einem Schritt 303 bei einer ersten Auswertung davon ausgegangen, daß sich ein Werkzeug in der Arbeitsspindel befindet.

In einem weiteren Schritt 304 wird dann das tatsächliche Massenträgheitsmoment $J_1$ des in der Arbeitsspindel befindlichen Werkzeuges auf der Grundlage einer beim Hochlauf der Arbeitsspindel gemessenen Größe berechnet. Nach der Formel:

$$M = J_{ges} \cdot 2\pi \cdot \frac{dn}{dt}$$

kann z.B. durch ein gemessene Hochlaufzeit t bei der Beschleunigung des Werkzeuges auf eine vorgegebene Referenzdrehzahl n bei einem konstanten Motormoment M das Gesamtträgheitsmoment $J_{ges}$ berechnet werden.

Das Gesamtträgheitsmoment $J_{Ges}$ setzt sich gemäß folgender Formel

$$J_{ges} = J_M + J_S + J_1 + J_{Sp} + .....$$

aus der Summe von Motorträgheitsmoment $J_M$, Spindelträgheitsmoment $J_S$, Werkzeugträgheitsmoment $J_1$ und den Trägheitsmomenten der weiteren zu beschleunigenden Massen, wie z.B. des Werkzeugspanners und dgl., zusammen. Daher kann das tatsächliche Trägheitsmoment $J_1$ des in der Arbeitsspindel befindlichen Werkzeuges dadurch berechnet werden, daß von dem gemessenen Gesamtträgheitsmoment $J_{ges}$ die bekannten Werte für das Motorträgheitsmoment $J_M$, das Spindelträgheitsmoment $J_S$ usw. subtrahiert werden.

In einem weiteren Schritt 305 wird dann aus den in der NC-Steuerung hinterlegten Geometriedaten des in der Arbeitsspindel befindlichen Werkzeuges ein Massenträgheitsmoment $J_2$ berechnet und in einem weiteren Schritt 306 mit dem im Schritt 304 ermittelten Massenträgheitsmoment $J_1$ verglichen. Wenn die Massenträgheitsmomente $J_1$ und $J_2$ voneinander abweichen, wird gemäß Schritt 302 der Antrieb der Arbeitsspindel gestoppt und eine Fehlermeldung ausgegeben.

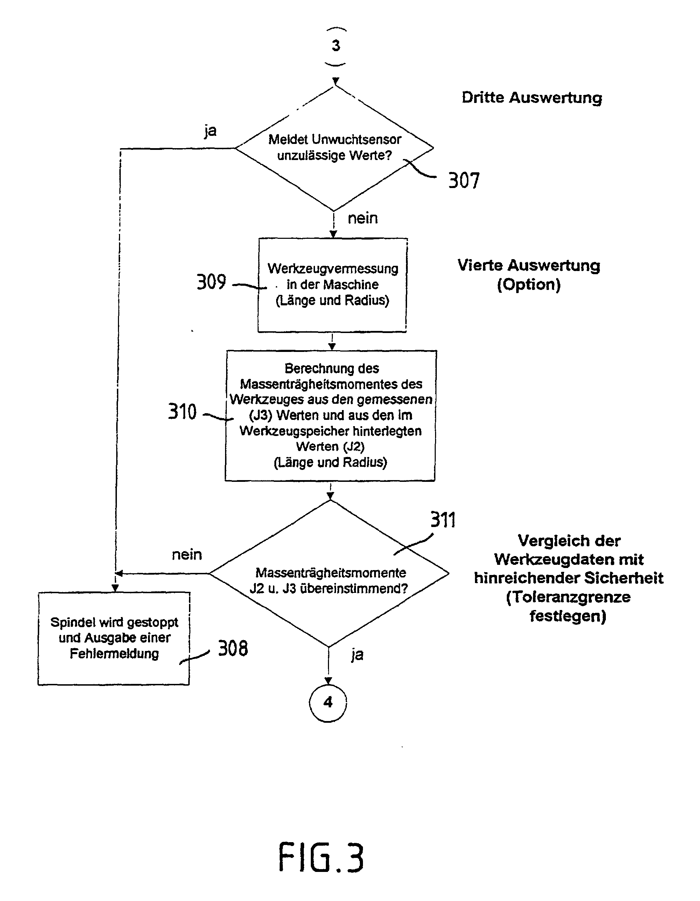

Stimmen die Massenträgheitsmomente $J_1$ und $J_2$ überein, wird gemäß Fig. 3 in einem nächsten Schritt 307 die Unwucht des in der Arbeitsspindel befindlichen Werkzeuges überprüft. Dies kann z.B. über einen Klopfsensor erfolgen, der aus dem Kraftfahrzeugsektor bekannt ist. Wenn die gemessene Unwucht einen maximal zulässigen Grenzwert übersteigt, wird in einem nächsten Schritt 308 die Arbeitsspindel gestoppt und eine Fehlermeldung ausgegeben. Liegt jedoch die gemessene Unwucht innerhalb des zulässigen Bereichs wird die Überprüfung fortgesetzt.

Bei Werkzeugmaschinen, die über eine gesonderte Einrichtung zur mechanischen oder optischen Werkzeugvermessung verfügen, kann eine zusätzliche weitere Sicherheitsüberprüfung durchgeführt werden. Dabei wird aus den bei einer Vermessung 309 des Werkzeuges ermittelten Werkzeugdaten in einem Schritt 310 ein Massenträgheitsmoment $J_3$ berechnet und in einem weiteren Schritt 311 mit dem Massenträgheitsmoment $J_2$ verglichen, das im Schritt 305 anhand der in der NC-Steuerung hinterlegten Werkzeugdaten berechnet wurde. Bei Abweichungen der Massenträgheitsmomente $J_2$ und $J_3$ wird die Arbeitsspindel gemäß Schritt 308 gestoppt und es wird eine Fehlermeldung ausgegeben.

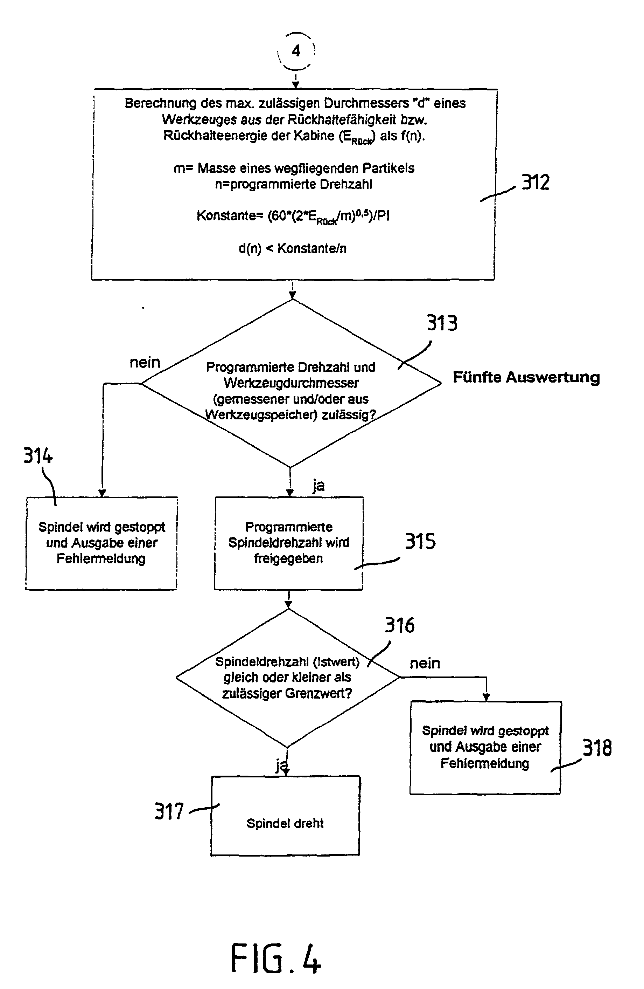

Wenn die Massenträgheitsmomente $J_2$ und $J_3$ übereinstimmen, wird gemäß Fig. 4 in einem nächsten Schritt 312 der maximal zulässige Durchmesser $d_{max}$ des Werkzeuges aus der Rückhaltefähigkeit bzw. Rückhalteenergie $E_{rück}$ der Schutzkabine als Funktion der Drehzahl berechnet. Dabei wird davon ausgegangen, daß die Schutzkabine eine bestimmte Energie ohne Bruchgefährdung aufnehmen kann. Diese Energie läßt sich durch Beschußversuche mit einem vorgegeben Projektil ermitteln. So können z.B. als Sichtscheiben verwendete Polycarbonatscheiben bei einer Dicke von 12 mm eine Energie von ca. 1100 Nm aufnehmen. Wenn ein Festigkeitsverlust infolge einer Alterung des Materials berücksichtigt wird, kann bei Polycarbonatsichtscheiben z.B. von einer maximalen Rückhalteenergie von 500 Nm ausgegangen werden. Aus dieser maximalen Rückhalteenergie ergibt sich gemäß folgender Formel ein Zusammenhang zwischen dem Werkzeugdurchmesser d und der Drehzahl n der Arbeitsspindel.

$$d < \frac{60}{\pi} \cdot \left( \frac{2 \cdot E_{R\ddot{u}ck}}{m} \right)^{0,5} \cdot \frac{1}{n}$$

Unter der Annahme, daß die Masse m eines wegfliegenden Teils 0,1 kg beträgt, kann gemäß dieser Formel ein maximal zulässiger Werkzeugdurchmesser $d_{max}$ für eine programmierte Solldrehzahl $n_{soll}$ berechnet werden.

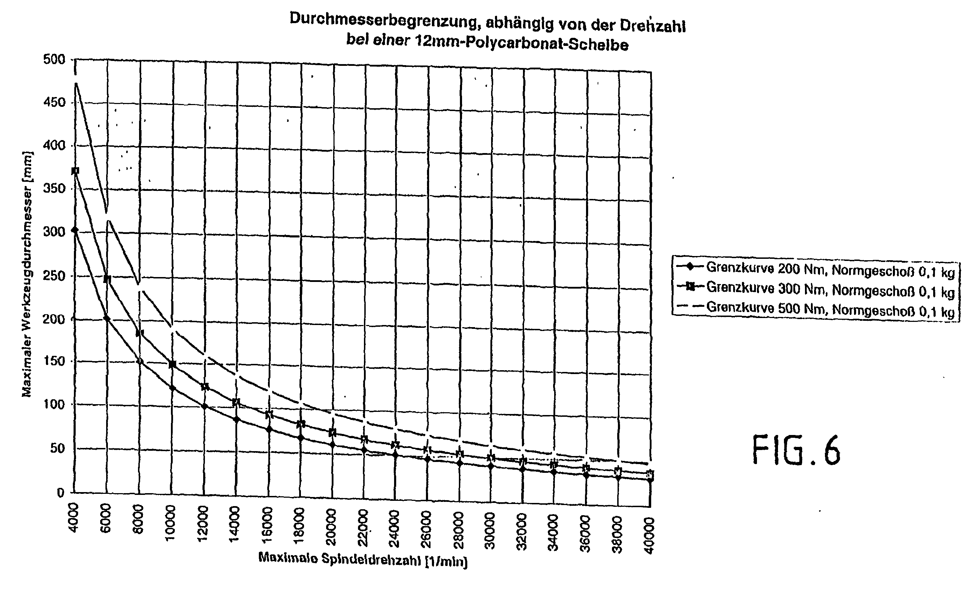

In Fig. 6 ist für eine Polycarbonat-Scheibe mit einer Dicke von 12 mm der Zusammenhang zwischen dem maximal zulässigen Werkzeugdurchmesser und der maximalen Spindeldrehzahl für unterschiedliche Rückhalteenergien bei einem Normgeschoß von 0,1 kg gezeigt.

Der im Schritt 312 berechnete Maximaldurchmesser $d_{max}$ wird in einem nächsten Schritt 313 mit dem gemessenen und/oder gespeicherten Werkzeugdurchmesser verglichen. Wenn der gemessene und/oder gespeicherte Werkzeugdurchmesser den maximal zulässigen Durchmesser übersteigt, wird die Arbeitsspindel in einem nächsten Schritt 314 gestoppt und eine Fehlermeldung ausgegeben. Anderfalls wird die programmierte Drehzahl $n_{soll}$ in einem Schritt 315 freigegeben.

Aus der zuletzt genannten Beziehung kann in gleicher Weise aber auch eine maximal zulässige Drehzahl der Arbeitsspindel für einen vorgegeben Durchmesser des Werkzeuges bestimmt und mit der programmierten Drehzahl verglichen werden.

Wenn die programmierte Drehzahl $n_{soll}$ freigegeben ist, kann in einem weiteren Schritt 316 geprüft werden, ob diese auch unterhalb eines z.B. durch die Lagerung vorgegeben Grenzwerts liegt Wenn dies der Fall ist, wird die Arbeitsspindel mit der programmierten Drehzahl gemäß Schritt 317 angetrieben. Anderfalls wird die Arbeitsspindel in einem Schritt 318 gestoppt und es wird eine Fehlermeldung ausgegeben.

Durch die erfindungsgemäße Überprüfung kann eine fehlerhafte Eingabe von Werkzeugdurchmesser und/oder Drehzahl erkannt und eine dadurch bedingte Gefährdung der Maschinenbediener verhindert werden.

**Patentansprüche**

1. Überwachungsverfahren für Werkzeugmaschinen mit einer motorisch drehangetriebenen Arbeitsspindel und einer trennenden Schutzeinrichtung, bei dem

   a) das tatsächliche Massenträgheitsmoment eines in die Arbeitsspindel eingesetzten Werkzeuges auf der Grundlage einer Messung bestimmt und mit einem aus vorgegebenen Werkzeugdaten für dieses Werkzeug berechneten Massenträgheitsmoment verglichen wird,
   b) eine vorgegebene Kenngröße für das in die Arbeitsspindel eingewechselte Werkzeug mit einer von der Festigkeit der Schutzeinrichtung abhängigen Maximalkenngröße für dieses Werkzeug verglichen wird, und

c) die Arbeitsspindel nur dann mit einer vorgegebenen Solldrehzahl angetrieben wird, wenn das tatsächliche Massenträgheitsmoment mit dem berechneten Massenträgheitsmoment übereinstimmt und die vorgegebene Kenngröße kleiner oder gleich der durch die Festigkeit der Schutzeinrichtung vorgegebenen Maximalkenngröße ist.

2. Überwachungsverfahren nach Anspruch 1, **dadurch gekennzeichnet, daß** die vorgegebene Kenngröße der Werkzeugdurchmesser ist, der mit einem für die programmierte Drehzahl vorgegeben Maximaldurchmesser verglichen wird.

3. Überwachungsverfahren nach Anspruch 1, **dadurch gekennzeichnet, daß** die vorgegebene Kenngröße die Solldrehzahl der Arbeitsspindel ist, die mit einer vom Werkzeugdurchmesser abhängigen Maximaldrehzahl verglichen wird.

4. Überwachungsverfahren nach einem der Ansprüche 1 bis 3, **dadurch gekennzeichnet, daß** bei Abweichungen zwischen dem tatsächlichen Massenträgheitsmoment und dem berechneten Massenträgheitsmoment und/oder bei Überschreiten der Maximalkenngröße der Antrieb der Arbeitsspindel gestoppt und/oder eine Fehlermeldung ausgegeben wird.

5. Überwachungsverfahren nach einem der Ansprüche 1 bis 4, **dadurch gekennzeichnet, daß** das tatsächliche Massenträgheitsmoment des in der Arbeitsspindel eingesetzten Werkzeuges auf der Grundlage einer bei der Beschleunigung des Werkzeuges auf eine vorgegebene Referenzdrehzahl gemessenen Hochlaufzeit ermittelt wird.

6. Überwachungsverfahren nach einem der Ansprüche 1 bis 4, **dadurch gekennzeichnet, daß** das tatsächliche Massenträgheitsmoment des in der Arbeitsspindel eingesetzten Werkzeuges auf der Grundlage der durch eine Messung erhaltenen Werkzeugabmessungen ermittelt wird.

7. Überwachungsverfahren nach einem der Ansprüche 1 bis 6, **dadurch gekennzeichnet, daß** die Arbeitsspindel nur dann mit der vorgegebenen Solldrehzahl angetrieben wird, wenn eine beim Hochfahren der Arbeitsspindel auf eine vorgegebene Referenzdrehzahl gemessene Stromaufnahme des Spindelantriebs über einer Referenzkurve liegt, die sich beim Hochfahren einer Arbeitsspindel ohne Werkzeug ergibt.

8. Überwachungsverfahren nach einem der Ansprüche 1 bis 7, **dadurch gekennzeichnet, daß** die Arbeitsspindel nur dann mit der vorgegebenen Solldrehzahl angetrieben wird, wenn eine beim Hochfahren der Arbeitsspindel auf eine vorgegebene Referenzdrehzahl gemessene Unwucht unterhalb einer maximal zulässigen Unwucht liegt

9. Überwachungseinrichtung für Werkzeugmaschinen mit einer motorisch drehangetriebenen Arbeitsspindel und einer trennenden Schutzeinrichtung, mit

   - einer Einrichtung zum Vergleich des durch eine Messung bestimmten Massenträgheitsmoments eines in die Arbeitsspindel eingesetzten Werkzeuges mit einem aus vorgegebenen Werkzeugdaten für dieses Werkzeug berechneten Massenträgheitsmoment,
   - einer Einrichtung zum Vergleich einer vorgegebenen Kenngröße für das in die Arbeitsspindel eingewechselte Werkzeug mit einer von der Festigkeit der Schutzeinrichtung abhängigen Maximalkenngröße für dieses Werkzeug und
   - einer Einrichtung zur Freigabe einer vorgegebenen Solldrehzahl der Arbeitsspindel, wenn das tatsächliche Massenträgheitsmoment mit dem berechneten Massenträgheitsmoment übereinstimmt und die vorgegebene Kenngröße kleiner oder gleich der durch die Festigkeit der Schutzeinrichtung vorgegebenen Maximalkenngröße ist.

10. Überwachungseinrichtung nach Anspruch 1, **dadurch gekennzeichnet, daß** sie eine Einrichtung zur Ermittlung eines zeitlichen Verlaufs der Stromaufnahme eines Antriebsmotors beim Hochlauf auf eine vorgegebene Referenzdrehzahl enthält.

11. Überwachungseinrichtung nach Anspruch 9 oder 10, **dadurch gekennzeichnet, daß** sie eine Einrichtung zur Erfassung einer unzulässigen Unwucht eines in der Arbeitsspindel angeordneten Werkzeuges enthält.

**Claims**

1. A method of monitoring machine tools with a rotatably motor-driven work spindle and a separating protective device, wherein:

   a)the actual mass moment of inertia of a tool inserted into the work spindle is determined on the basis of a measurement and is compared with a mass moment of inertia calculated for this tool from preset tool data,
   b)a preset parameter for the tool changed in the work spindle is compared with a maximum parameter for this tool dependent upon the strength of the protective device, and

c) the work spindle is driven at a preset set speed of revolution only when the actual mass moment of inertia corresponds to the calculated mass moment of inertia and the preset parameter is smaller than or equal to the maximum parameter preset by the strength of the protective device.

2. A monitoring method according to claim 1, **characterised in that** the preset parameter is the tool diameter which is compared with a maximum diameter preset for the programmed speed of revolution.

3. A monitoring method according to claim 1, **characterised in that** the preset parameter is the set speed of revolution of the work spindle, which is compared with a maximum speed of revolution dependent upon the tool diameter.

4. A monitoring method according to any one of claims 1 to 3, **characterised in that** in the event of deviations between the actual mass moment of inertia and the calculated mass moment of inertia and/or if the maximum parameter is exceeded the work spindle drive is stopped and/or an error message is output.

5. A monitoring method according to any one of claims 1 to 4, **characterised in that** the actual mass moment of inertia of the tool inserted in the work spindle is determined on the basis of a run-up time measured on acceleration of the tool to a preset reference speed of revolution.

6. A monitoring method according to any one of claims 1 to 4, **characterised in that** the actual mass moment of inertia of the tool inserted in the work spindle is determined on the basis of the tool dimensions obtained by a measurement.

7. A monitoring method according to any one of claims 1 to 6, **characterised in that** the work spindle is driven at the preset set speed of revolution only when a current consumption of the spindle drive as measured on the run-up of the work spindle to a preset reference speed of revolution is situated above a reference curve obtained on the run-up of a work spindle without a tool.

8. A monitoring method according to any one of claims 1 to 7, **characterised in that** the work spindle is driven at the preset set speed of revolution only when an imbalance measured on the run-up of a work spindle to a preset reference speed of revolution is below a maximum admissible imbalance.

9. A monitoring device for machine tools with a rotatably motor-driven work spindle and a separating protective device, with

- a device for comparing the mass moment of inertia of a tool inserted in the work spindle as determined by a measurement with a mass moment of inertia calculated from preset tool data for said tool,

- a device for comparison of a preset parameter for the tool changed in the work spindle with a maximum parameter for that tool dependent on the strength of the protective device and

- a device for releasing a preset set speed of revolution of the work spindle when the actual mass moment of inertia corresponds to the calculated mass moment of inertia and the preset parameter is smaller than or equal to the maximum parameter preset by the strength of the protective device.

10. A monitoring method according to claim 1, **characterised in that** it comprises a device for detecting the current consumption per unit of time of a drive motor on run-up to a preset reference speed of revolution.

11. A monitoring method according to claim 9 or 10, **characterised in that** it comprises a device for detecting an inadmissible imbalance of a tool disposed in the work spindle.

## Revendications

1. Procédé de surveillance pour machines-outils avec un arbre moteur entraîné par moteur et un dispositif de protection séparateur dans lequel

a) le moment d'inertie de masse réel d'un outil mis en oeuvre dans l'arbre moteur est déterminé sur la base d'une mesure et est comparé à un moment d'inertie de masse calculé pour cet outil à partir de données outils déterminées au préalable,
b) une grandeur caractéristique déterminée au préalable pour l'outil chargé dans l'arbre moteur est comparée à une grandeur caractéristique maximale pour cet outil, dépendante de la résistance du dispositif de protection, et
c) l'arbre moteur est alors entraîné à une vitesse de consigne déterminée au préalable seulement si le moment d'inertie de masse réel correspond au moment d'inertie de masse calculé et si la grandeur caractéristique déterminée au préalable est inférieure ou égale à la grandeur caractéristique maximale déterminée au préalable par la résistance du dispositif de protection.

**2.** Procédé de surveillance selon la revendication 1, **caractérisé en ce que** la grandeur caractéristique déterminée au préalable est le diamètre de l'outil qui est comparé à un diamètre maximal déterminé au préalable pour la vitesse programmée.

**3.** Procédé de surveillance selon la revendication 1, **caractérisé en ce que** la grandeur caractéristique déterminée au préalable est la vitesse de consigne de l'arbre moteur qui est comparée à une vitesse maximale dépendante du diamètre de l'outil.

**4.** Procédé de surveillance selon l'une quelconque des revendications 1 à 3, **caractérisé en ce que**, en cas de divergences entre le moment d'inertie de masse réel et le moment d'inertie de masse calculé et/ou en cas de dépassement de la grandeur caractéristique maximale, l'entraînement de l'arbre moteur est interrompu et/ou une annonce d'erreur est émise.

**5.** Procédé de surveillance selon l'une quelconque des revendications 1 à 4, **caractérisé en ce que** le moment d'inertie de masse réel de l'outil mis en oeuvre dans l'arbre moteur est déterminé sur la base d'une durée de marche à plein régime mesurée lors de l'accélération de l'outil à une vitesse de référence déterminée au préalable.

**6.** Procédé de surveillance selon l'une quelconque des revendications 1 à 4, **caractérisé en ce que** le moment d'inertie de masse réel de l'outil mis en oeuvre dans l'arbre moteur est déterminé sur la base des dimensions de l'outil obtenues par une mesure.

**7.** Procédé de surveillance selon l'une quelconque des revendications 1 à 6, **caractérisé en ce que** l'arbre moteur n'est entraîné à la vitesse de consigne déterminée au préalable que si un enregistrement du courant de l'entraînement de la broche mesuré lors de la marche à plein régime de l'arbre moteur à une vitesse de référence déterminée au préalable se situe au-dessus d'une courbe de référence qui résulte lors de la marche à plein régime d'un arbre moteur sans outil.

**8.** Procédé de surveillance selon l'une quelconque des revendications 1 à 7, **caractérisé en ce que** l'arbre moteur n'est entraîné à la vitesse de consigne déterminée au préalable que si un défaut d'équilibrage mesuré lors de la marche à plein régime de l'arbre moteur à une vitesse de référence déterminée au préalable se situe en dessous d'un défaut d'équilibrage maximal autorisé.

**9.** Système de surveillance pour machines-outils avec un arbre moteur entraîné par moteur et un dispositif de protection séparateur avec

- un dispositif pour comparer le moment d'inertie de masse d'un outil mis en oeuvre dans l'arbre moteur, déterminé par une mesure, à un moment d'inertie de masse calculé pour cet outil à partir de données outils déterminées au préalable,
- un dispositif pour comparer une grandeur caractéristique déterminée au préalable pour l'outil chargé dans l'arbre moteur à une grandeur caractéristique maximale pour cet outil, dépendante de la résistance du dispositif de protection, et
- un dispositif pour valider une vitesse de consigne déterminée au préalable de l'arbre moteur si le moment d'inertie de masse réel correspond au moment d'inertie de masse calculé et la grandeur caractéristique déterminée au préalable est inférieure ou égale à la grandeur caractéristique maximale déterminée au préalable par la résistance du dispositif de protection.

**10.** Système de surveillance selon la revendication 1, **caractérisé en ce qu'**il contient un dispositif pour déterminer un tracé temporel d'enregistrement du courant d'un moteur d'entraînement lors de la marche à plein régime à une vitesse de référence déterminée au préalable.

**11.** Système de surveilance selon la revendication 9 ou 10, **caractérisé en ce qu'**il comprend un dispositif pour déterminer un défaut d'équilibrage non autorisé d'un outil disposé dans l'arbre moteur.

EP 1 087 274 B1

**Beginn der Kontrollfunktionen**

100 — Arbeiten mit einem NC-Programm

101 — NC-Programm erstellen oder ein fertiggestelltes Programm einlesen

102 — Werkzeuge befinden sich im Werkzeugmagazin, die Werkzeugdaten (Geometrie) sind in der Steuerung hinterlegt

103 — NC-Programm starten

104 — Werkzeug wird durch NC-Programm aus Werkzeugmagazin angefordert und in die Arbeitsspindel eingewechselt

200 — Manuelles Arbeiten mit der Maschine

201 — Werkzeuge befinden sich im Werkzeugmagazin oder werden von Hand manuell eingelegt. Die Werkzeugdaten (Geometrie) sind in jedem Fall in der Steuerung hinterlegt. Wird ein Werkzeug aus dem Magazin benötigt, wird es automatisch eingewechselt.

300 — Werkzeug wird auf Referenzdrehzahl beschleunigt, Stromaufnahme wird als Funktion der Zeit gemessen und mit in der Steuerung hinterlegten Referenz verglichen

1

# FIG.1

8

FIG.2

```
                           3

                                                    Dritte Auswertung

        ja
                    Meldet Unwuchtsensor
                    unzulässige Werte?                       307

                           nein

                                                    Vierte Auswertung
          309        Werkzeugvermessung              (Option)
                     in der Maschine
                     (Länge und Radius)


                     Berechnung des
                     Massenträgheitsmomentes des
                     Werkzeuges aus den gemessenen
          310        (J3) Werten und aus den im
                     Werkzeugspeicher hinterlegten
                     Werten (J2)
                     (Länge und Radius)

                                              311   Vergleich der
                                                    Werkzeugdaten mit
        nein                                        hinreichender Sicherheit
                    Massenträgheitsmomente              (Toleranzgrenze
                    J2 u. J3 übereinstimmend?              festlegen)

        Spindel wird gestoppt
        und Ausgabe einer
        Fehlermeldung            308          ja

                                              4
```

# FIG.3

FIG.4

Stromverlauf beim Hochlauf mit und ohne Werkzeug

Zeit [ms]

FIG. 5

EP 1 087 274 B1

Durchmesserbegrenzung, abhängig von der Drehzahl
bei einer 12mm-Polycarbonat-Scheibe

Maximaler Werkzeugdurchmesser [mm]

Maximale Spindeldrehzahl [1/min]

→ Grenzkurve 200 Nm, Normgeschoß 0,1 kg
→ Grenzkurve 300 Nm, Normgeschoß 0,1 kg
- - Grenzkurve 500 Nm, Normgeschoß 0,1 kg

FIG.6

EP 1 087 274 B1